# EUROPÄISCHE PATENTSCHRIFT

(11) **EP 1 985 849 B1**
(45) Veröffentlichungstag und Bekanntmachung des Hinweises auf die Patenterteilung: **14.05.2014**
(21) Anmeldenummer: 08006665.7
(22) Anmeldetag: 01.04.2008
(51) Int. Cl.: F03D 7/00, F03D 7/04, F03D 11/00

(54) **Verfahren zum Betreiben einer Windenergieanlage und Windenergieanlage**
Method for operating a wind farm and wind farm
Procédé de fonctionnement d'une éolienne et éolienne

(30) Priorität: 27.04.2007 DE 102007020423
(43) Veröffentlichungstag der Anmeldung: 29.10.2008
(73) Patentinhaber: Daubner & Stommel GbR Bau-Werk-Planung, 27777 Ganderkesee (DE)
(72) Erfinder: Stommel, Matthias, 27777 Ganderkesee (DE)
(74) Vertreter: Aulich, Martin

(56) Entgegenhaltungen:
- WO-A1-01/33234
- WO-A1-2005/015012
- US-A1- 2007 024 059

## Beschreibung

Die vorliegende Erfindung betrifft ein Verfahren zum Betreiben einer Windenergieanlage, mit einem von Wind antreibbaren Rotor mit zumindest einem Rotorblatt, sowie mit mindestens einem elektrischen/elektronischen Bauteil und/oder einer elektrischen/elektronischen Baugruppe, etwa einem Generator zur Umwandlung der mechanischen Energie des Rotors in elektrische Energie, elektrischen Leitungen, elektrischen Anschlüssen, elektrischen Motoren oder dergleichen. Des Weiteren betrifft die Erfindung eine Windenergieanlage zur Durchführung dieses Verfahrens sowie ein System zu Überwachung der genannten Bauteile/Baugruppen einer Windenergieanlage.

Elektrische/elektronische Bauteile/Baugruppen von Windenergieanlagen sind störungsanfällig. Betriebsstörungen dieser Bauteile/Baugruppen können zu langwierigen Ausfällen der Windenergieanlagen führen. Im schlimmsten Fall können Kurzschlüsse Brände einzelner Komponenten oder der gesamten Windenergieanlage verursachen. Es besteht daher ein großer Bedarf. Störungen elektrischer/elektronischer Bauteile/Baugruppen so frühzeitig wie möglich zu erkennen, um angemessen reagieren und lange Ausfallzeiten vermeiden zu können.

Die Druckschrift WO 2005/015012 A1 zeigt eine Überwachung von Betriebsparametern einer Windenergieanlage unter anderem durch Messung von elektrischen Strömen und Spannungen. Ähnliches zeigt die Druckschrift US 2007/0024059 A1.

Die Druckschrift WO 01/33234 A1 zeigt die Messung von elektrischen Strömen in einer Leitung eines Blitzableiters durch Messung des diesen Strom umgebenden Magnetfeldes.

Aufgabe der vorliegenden Erfindung ist es daher, ein Verfahren zum Betreiben einer Windenergieanlage, eine entsprechende Windenergieanlage sowie ein System anzugeben, mit denen im Betrieb die Überwachung von Betriebszuständen elektrischer/elektronischer Bauteile/Baugruppen der Anlage in möglichst zuverlässiger Weise möglich ist.

Diese Aufgabe wird gelöst durch ein Verfahren der eingangs genannten Art, das die Merkmale des Anspruches 1 aufweist, eine Windenergieanlage mit den Merkmalen des Anspruches 14 sowie ein Überwachungssystem mit den Merkmalen des Anspruches 13.

Zur Überwachung der Betriebszustände des elektrischen/elektronischen Bauteils und/oder der elektrischen/elektronischen Baugruppe wird von dem Bauteil/der Baugruppe ungesteuert ausgehende und/oder von diesem Bauteil/der Baugruppe ungesteuert beeinflusste, elektromagnetische Strahlung mittels einer geeigneten, vorzugsweise von dem Bauteil/der Baugruppe beabstandeten, Erfassungseinrichtung erfasst, insbesondere gemessen. Die Ergebnisse werden anschließend mittels einer Analyseeinrichtung anhand eines oder mehrerer vorgegebener Kriterien derart analysiert, dass Änderungen der Betriebszustände des Bauteils und/oder der Baugruppe erkennbar sind. Die Erfassung erfolgt vorzugsweise während des Betriebs der Windenergieanlage, bevorzugt kontinuierlich oder in gewissen, insbesondere periodischen, Zeitabständen.

Die Erfindung geht von der Erkenntnis aus, dass von elektrischen/elektronischen Bauteilen/Baugruppen ungesteuerte elektromagnetische Strahlung, d.h. elektromagnetische Wellen, ausgehen oder dass die Bauteile/Baugruppen dieses vorgenannte physikalische Phänomen mindestens ungesteuert beeinflusst. Die Begriffe "elektrisches/elektronisches Bauteil" bzw. "elektrische/elektronische Baugruppe" sind im Rahmen dieser Anmeldung weit gefasst. Hierunter sind insbesondere sämtliche Bauteile und Baugruppen, etwa Geräte, Anlagen, Leitungen, Kleinbauteile oder dergleichen, gefasst, die elektrisch betrieben werden, von elektrischem Strom durchflossen werden, Elektrizität erzeugen oder die zur Weiterleitung von Elektrizität dienen.

Nachfolgend wird sowohl für den Begriff "Baugruppe" als auch für den Begriff "Bauteil" vereinfachend und zusammenfassend ausschließlich der Begriff "Bauteil" benutzt.

Die Erfindung geht weiterhin von der Erkenntnis aus, dass die vorgenannten, auf das Bauteil zurückgehenden oder die durch das Bauteil beeinflussten Wellen abhängig sind von dem Betriebszustand des jeweiligen Bauteils, d.h. kennzeichnend sind für den Betriebszustand. Sobald das überwachte Bauteil etwa Störungen aufweist, ändern sich diese erzeugten oder beeinflussten Wellen. Ein Spezialfall von derartigen Änderungen der Wellen ist dabei naturgemäß ein erstmaliges oder erneutes Auftreten derselben. Die Änderungen, insbesondere das erstmalige oder erneute Auftreten, können erfasst und mittels der Analyseeinrichtung analysiert werden. Beispielsweise kann im Falle eines Kurzschlusse von dem Ort des Kurzschlusses ein elektromagnetischer Impuls ausgehen, der erfasst und im Rahmen der Analyse dem Schadensort zugeordnet wird.

Im Rahmen der Erfassung und/oder Analyse der vorgenannten Wellen können beispielsweise die Frequenz und/oder die Stärke einer elektromagnetischen Welle erfasst und/oder analysiert werden.

Aus der Analyse kann vorzugsweise bestimmt werden, welches Bauteil einer Mehrzahl von Bauteilen und/oder weiche Art von Bauteil eine Störung aufweist oder allgemein welchem Bauteil und/oder welcher Bauteilart die Änderung des Betriebszustandes zuzuordnen ist. In einer weiteren Ausführungsform kann bestimmt werden, um welche Art der Störung des Bauteils es sich handelt.

Die vorgenannten elektromagnetischen Wellen sind ungesteuert, d.h., nicht gezielt verursacht. Vielmehr bezieht sich die Erfindung auf die Erfassung des vorgenannten physikalischen Phänomens, das Ausfluss inhärenter Eigenschaften der elektrischen/elektronischen Bauteile ist, nämlich im Betrieb in der genannten Weise quasi als Nebenprodukt elektromagnetische Wellen auszusenden oder derartige Wellen zu beeinflussen.

Es ist dabei auch eine wesentliche Ausführungsform der Erfindung, mittels eines geeigneten Senders elektromagnetische Wellen in Richtung des Bauteils zu dem Bauteil hinzusenden, Diese elektromagnetischen Wellen, beispielsweise Mikrowellen oder Funkwellen, können von dem elektrischen/elektronischen Bauteil beeinflusst, d.h. verändert werden. Die abhängig vom Betriebszustand des Bauteils beeinflussten oder beeinflussbaren elektromagnetischen Wellen können anschließen mittels der Erfassungseinrichtung, die mindestens einen Empfänger für derartige Wellen aufweist, erfasst werden und mittels der Analyseeinrichtung analysiert werden.

Die vorgenannten Wellen können mit verschiedenen Erfassungseinrichtungen erfasst werden. Von dem jeweiligen elektrischen/elektronischen Bauteil ausgesandte elektromagnetische Strahlung, die sich leitungsungebunden von dem Bauteil zur Erfassungseinrichtung fortbewegt, kann mit einer Erfassungseinrichtung erfasst werden, die einen entsprechenden Empfänger derartiger elektromagnetischer Strahlung aufweist. Die Frequenz dieser Strahlung wird sich häufig im Funkbereich bewegen. Entsprechend werden vorzugsweise Funkempfänger eingesetzt. Alternativ oder zusätzlich wird der Einsatz von Mikrowellenempfängern häufig sein.

Wenn leitungsgebundene Wellen erfasst werden sollen, kann dies beispielsweise mit entsprechenden Messgeräten geschehen, die an dasselbe elektrische Leitungsnetz angeschlossen sind wie das elektrische/elektronische Bauteil selbst.
In einer besonderen Ausführungsform der Erfindung wird im Rahmen der Analyse des vorgenannten physikalischen Phänomens, das insbesondere der Erkennung von Störungen des Betriebszustandes des jeweiligen Bauteils dient, etwa Kurzschlüssen oder dergleichen, mindestens ein die erfassten elektromagnetischen Wellen charakterisierender Ist-Wert mit einem vorgegebenen Soll-Wert oder einem vorgegebenen Grenzwert verglichen. Ein derartiger, charakterisierender Ist-Wert kann beispielsweise die Frequenz und/oder die Stärke einer erfassten elektromagnetischen Welle sein.

In einer weiteren Ausführungsform der Erfindung ist der vorgegebene Soll-Wert ein Referenzwert, der den ungestörten Betriebszustand des Bauteils kennzeichnet.

Dieser Referenzwert kann im Rahmen einer Referenzerfassung bzw. Referenzmessung ermittelt werden. Dabei werden die im ungestörten Zustand des Bauteils von diesem ausgehenden und/oder beeinflussten elektromagnetischen Wellen erfasst. Die so erfassten Werte dienen bevorzugt unmittelbar als Referenzwerte für nachfolgende Messungen. Allgemein können aus diesen erfassten Werten jedenfalls Referenzwerte abgeleitet werden, Entscheidend ist, dass die ermittelten Referenzwerte von den in der beschriebenen Weise erfassten Werten mittelbar oder unmittelbar abhängen.

Vorzugsweise werden die elektromagnetischen Wellen kontinuierlich oder in gewissen Zeitabständen erfasst und die erfassten Werte - Messwerte - in einem insbesondere der Analyseeinrichtung zugeordneten Speicher zeitbezogen abgespeichert. Bevorzugt werden die zeitbezogen gespeicherten Werte in einem entsprechenden Zeit-Werte-Diagramm visualisiert, etwa auf einem der Analyseeinrichtung zugeordneten Bildschirm.

Die zeitbezogen abgespeicherten, erfassten Werte der elektromagnetischen Wellen können automatisch derart analysiert werden, dass aus dem zeitlichen Verlauf der erfassten Werte kurz-, mittel-, oder langfristige Trends oder Entwicklungen erkennbar sind. Mittels einer derartigen Analyse ist beispielsweise frühzeitig erkennbar, ob sich das Betriebsverhalten des Bauteils verschlechtert. Vorteilhafterweise können aus den Trends oder Entwicklungen zukünftige Betriebsstörungen frühzeitig erkannt werden.

Abhängig von den erfassten elektromagnetischen Wellen, insbesondere abhängig von dem Ergebnis des oben dargestellten Vergleichs des die Wellen charakterisierenden Ist-Werts mit dem Sollwert oder dem Grenzwert und/oder abhängig von den möglicherweise erkannten Trends der erfassten Werte, werden bevorzugt einzelne Bauteile der Windenergieanlage gesteuert oder geregelt. Dabei werden sie vorzugsweise ein- oder ausgeschaltet, oder es werden ein oder mehrere elektromagnetische, akustische oder elektrische Signale erzeugt.

Wie der Fachmann des Standes der Technik erkennt, sind vielfältige Maßnahmen denkbar, die abhängig vom Ergebnis des Vergleichs eingeleitet werden können, und die im Zusammenhang mit dem Betrieb der Windenergieanlage stehen, Beispielsweise kann nach der Detektion des Ausfall eines ersten Bauteils ein zweites, redundantes Bauteil aktiviert werden, das die Funktionen des ersten Bauteils übernimmt.

Allgemein kann abhängig von der erfindungsgemäßen Analyse der erfassten elektromagnetischen Wellen mindestens ein Betriebsparameter der Windenergieanlage eingestellt werden, etwa der Windanstellwinkel mindestens eines Rotorblattes der Windenergieanlage.

Sobald durch die Analyse beispielsweise Störungen des Bauteils erkannt werden, etwa ein Kurzschluss in oder an dem Bauteil, können in einer Ausführungsform entsprechende Warnsignale erzeugt werden, die vorzugsweise im Rahmen einer Ferndiagnose und/oder Fernwartung der Windenergieanlage mittels einer geeigneten Datenfernübertragungseinrichtung, etwa einer an das Internet angeschlossenen Computereinrichtung, an einen entfernten Empfänger derartiger Signale übertragen werden, beispielsweise an eine zweite Computereinrichtung.

Es ist zweckmäßig, dass das entsprechende erfindungsgemäße Überwachungssystem aus Erfassungseinrichtung und Analyseeinrichtung mittels einer geeigneten Datenverbindung verbunden ist mit der eigentlichen Steuerungs- und/oder Regelungseinrichtung zur Betriebsführung der Windenergieanlage, mittels derer im Betrieb der Anlage die unterschiedlichen Betriebsparameter der Windenergieanlage eingestellt werden, etwa der Windanstellwinkel des mindestens einen Rotorblatts. Unter Datenverbindung wird jede Art von Kabelverbindung oder drahtloser Verbindung verstanden, mit denen Informationen von dem Überwachungssystem zu der Steuerungs- und/oder Regelungseinrichtung - und bevorzugt auch in die andere Richtung - übertragen werden können.

Über die Datenverbindung werden vorzugsweise Störungsmeldungen von dem Überwachungssystem zu der Steuerungs- und/oder Regelungseinrichtung der Windenergieanlage übertragen. Eine durch das Überwachungssystem detektierte Störung eines Bauteils kann somit der Steuerungs- und/oder Regelungseinrichtung zur Betriebsführung der Anlage übermittelt werden. Abhängig von der detektierten Störung kann die Steuerungs- und/oder Regelungseinrichtung dann geeignete Maßnahmen einleiten. So kann etwa die Windenergieanlage in einen anderen Betriebsmodus geschaltet werden, insbesondere abgeschaltet und/oder stromlos geschaltet werden.

In die erfindungsgemäße Analyse bzw. Auswertung der erfassten elektromagnetischen Wellen fließen bevorzugt Betriebszustände der Windenergieanlage repräsentierende Daten ein, insbesondere die aktuelle Drehzahl des Rotors, die aktuelle Leistung der Windenergieanlage oder andere derartige Daten. Diese Daten können dem Überwachungssystem von der Steuerungs- und/oder Regelungseinrichtung zur Verfügung gestellt werden, bevorzugt, indem diese Daten über die vorgenannte Datenverbindung übertragen werden.

Weitere Merkmale der vorliegenden Erfindung ergeben sich aus den beigefügten Unteransprüchen, aus der nachfolgenden Beschreibung eines bevorzugten Ausführungsbeispiels sowie aus der beigefügten Zeichnung. Darin zeigt:

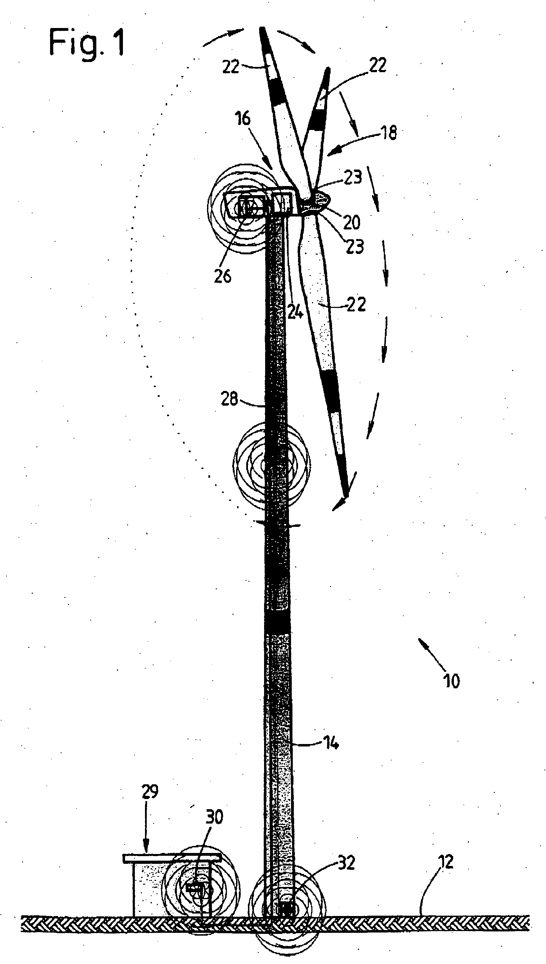

- Fig. 1: eine seitliche Schrägansicht einer Windenergieanlage, die gemäß dem erfindungsgemäßen Verfahren betrieben wird.

In der Zeichnung ist eine Windenergieanlage 10 dargestellt, die am oberen Ende eines vertikalen, auf einem horizontalen Untergrund 12 angeordneten Turms 14 eine auf der Turmoberseite angeordnete Gondel 16 aufweist. Wie der Fachmann des Standes der Technik weiß, sind für die genaue Ausbildung eines Turms 14 einer Windenergieanlage 10 vielfältige Ausführungsformen denkbar. Die Erfindung ist naturgemäß nicht auf die in der Zeichnung beschriebene, kegelstumpfförmige Form des Turms 14 beschränkt. Beispielsweise kann der Turm 14 auch als Gittermast ausgebildet sein.

An einem Wind zugewandten Ende der Gondel 16 ist ein Rotor 18 angeordnet, der eine Nabe 20 aufweist. Mit der Nabe 20 verbunden sind zwei Rotorblätter 22, wobei die Rotorblattwurzeln 23 der Rotorblätter 22 in entsprechende Öffnungen der Nabe 20 eingesteckt und in bekannter Weise mit dieser verbunden sind.

Der Rotor 18 dreht sich um eine leicht gegenüber der Horizontalen nach oben geneigte Achse. Sobald Wind auf die Rotorblätter 22 trifft, wird der Rotor 18 mitsamt Rotorblättern 22 um die Rotorachse in Rotation versetzt. Die Rotorblätter 22 überstreichen während der Rotation eine Kreisfläche. Über eine nicht dargestellte, allerdings den Fachleuten des Standes der Technik bekannte, Versteileinrichtung können die Rotorblätter 22 einzeln in ihrer Stellung zum Wind verändert werden, d.h. der Anstellwinkel der Rotorblätter 22 zum Wind ist einstellbar. Die Bewegungsenergie der Rotorachse wird über ein innerhalb der Gondel 16 angeordnetes, elektronisches Getriebe 24 einem ebenfalls innerhalb der Gondel 16 angeordneten Generator 26 zugeführt, der die Bewegungsenergie in elektrischen Strom umwandelt.

Die elektrische Energie wird über Stromleitungen 28 von der Gondel 16 über den Turm 14 einem separaten Technikhaus 29 zugeführt, in dem die Netzanschlusstechnik 30 angeordnet ist. Zur Steuerung/Regelung der Windenergieanlage 10 ist eine entsprechende Steuerungs-/Regelungstechnik 32 vorgesehen, die innerhalb des Turms 14 im Bodenbereich desselben angeordnet ist.

Insbesondere das elektronische Getriebe 24, der Generator 26, die elektrischen Leitungen 28, die Netzanschlusstechnik 30 sowie die Steuerungs-/Regelungselektronik 32 sind jeweils elektrische/elektronische Bauteile, deren Betriebszustände mithilfe der vorliegenden Erfindung überwacht werden. Dazu wird insbesondere ausgenutzt, dass die Bauteile im Betrieb ungewollt, vielfach als unerwünschtes "Nebenprodukt", elektromagnetische Wellen ausstrahlen. Die ausgestrahlten elektromagnetischen Wellen sind dabei kennzeichnend für den jeweiligen Betriebszustand der Bauteile 24 - 32.

Ein nicht dargestelltes System zur Überwachung der Bauteile 24 - 32 weist einen nicht dargestellten Empfänger für diese elektromagnetischen Wellen auf, nämlich einen Funkempfänger. Weiter umfasst das System eine Analyseeinrichtung, mit der die empfangenen Wellen analysiert werden können. Die Analyseeinrichtung kann dazu beispielsweise über ein im Stand der Technik bekanntes Spektralanalysegerät verfügen sowie über eine geeignete Computereinrichtung.

Aus dem jeweils erfassten bzw. empfangenen Spektrum ermittelt die Analyseeinrichtung, von welchem der Bauteile 24 - 32 die jeweils gemessene Strahlung stammt. Zum anderen kann die Analyseeinrichtung feststellen, ob/wenn die Betriebszustände der Bauteile gestört sind.

In der Fig. 1 ist beispielsweise in der Mitte des Turms 14 ein Riss der Kabelleitung 28 dargestellt. Der Riss der Kabelleitung 28 führt zu einem elektromagnetischen impuls, der detektiert und analysiert wird. Der Riss der Kabelleitung wird demnach an dem erstmaligen Auftreten einer entsprechenden elektromagnetischen Welle erkannt.

Störungen der anderen Bauteile 24 - 26, 30 - 32 manifestieren sich in einer zeitabhängigen Änderung des Spektrums der jeweils empfangenen, elektromagnetischen Strahlung. Die Analyseeinrichtung vergleicht zur Erkennung dieser Störungen jeweils die gemessenen Spektren mit von diesen Bauteilen 24 - 26, 30 - 32 ausgehenden Referenzspektren, die zuvor im Rahmen von vorausgegangenen Referenzmessungen ermittelt wurden und die in einem Speicher der Computereinrichtung der Analyseeinrichtung abgespeichert wurden.

In der Praxis wird über den gesamten, interessierenden Spektralbereich in gewissen Zeitabständen oder kontinuierlich ein Gesamtspektrum der von dem Funkempfänger empfangenen, von den Bauteilen 24 - 32 ausgehenden elektromagnetischen Wellen aufgenommen. Die Beiträge der einzelnen Bauteile 24 - 32 zu dem Gesamtspektrum werden ermittelt und mittels der Computereinrichtung der Analyseeinrichtung den einzelnen Bauteilen in einer Datenbank zugeordnet und abgespeichert.

Abhängig davon, bei welchem Bauteil 24 - 32 eine Änderung des Betriebszustandes erkannt wird und/oder abhängig davon, welcher Art die Änderung des Betriebszustandes ist, können unterschiedliche Maßnahmen ergriffen werden.

Beispielsweise können bei Detektion eines Kurzschlusses in der Stromleitung 28 sämtliche elektrischen/elektronischen Bauteile der Windenergieanlage 10 abgeschaltet und/oder spannungslos bzw. stromlos geschaltet werden.

Änderungen des Betriebszustandes des Generators 26 oder der anderen Bauteile können dazu führen, dass eine geeignete, der Analyseeinrichtung zugeordnete Signalerzeugungseinrichtung die Erzeugung geeigneter Störungs- bzw. Warnmeldungen bewirkt.

Wie der Fachmann der Technik erkennt, sind hier vielfältige Möglichkeiten denkbar.

### Bezugszeichenliste:

- 10: Windenergieanlage
- 12: Untergrund
- 14: Turm
- 16: Gondel
- 18: Rotor
- 20: Nabe
- 22: Rotorblatt
- 23: Rotorblattwurzel
- 24: Getriebe
- 26: Generator
- 28: Stromleitung
- 29: Technikhaus
- 30: Netzanschlusstechnik
- 32: Steuerungs-/Regelungstechnik

## Patentansprüche

1. Verfahren zum Betreiben einer Windenergieanlage, mit einem von Wind antreibbaren Rotor (18) mit zumindest einem Rotorblatt (22), sowie mit mindestens einem elektrischen/elektronischen Bauteil oder einer Baugruppe aus elektrischen/elektronischen Bauteilen, etwa einem Generator zur Umwandlung der mechanischen Energie des Rotors (18) in elektrische Energie, elektrischen Leitungen, elektrischen Anschlüssen, elektrischen Motoren oder dergleichen, **dadurch gekennzeichnet, dass** zur Überwachung der Betriebszustände des Bauteils/der Baugruppe (24 - 32) von dem Bauteil/der Baugruppe (24 - 32) ungesteuert ausgehende und/oder von diesem Bauteil/der Baugruppe (24 - 32) ungesteuert beeinflusste elektromagnetische Wellen mittels einer von dem Bauteil/der Baugruppe (24 - 32) beabstandeten Erfassungseinrichtung gemessen wird und mittels einer Analyseeinrichtung anhand eines oder mehrerer vorgegebener Kriterien derart analysiert wird, dass eine Änderung des Betriebszustandes des Bauteils/der Baugruppe (24 - 32) erkennbar ist.

2. Verfahren gemäß Anspruch 1, **dadurch gekennzeichnet, dass** im Verlaufe der Analyse zur Erkennung von Störungen des Betriebszustandes des Bauteils/der Baugruppe (24 - 32), Insbesondere Kurzschlüssen oder dergleichen, mindestens ein die erfassten elektromagnetischen Wellen charakterisierender Ist-Wert mit einem vorgegebenen Sollwert oder einem vorgegebenen Grenzwert verglichen wird.

3. Verfahren gemäß Anspruch 1 oder 2, **dadurch gekennzeichnet, dass** der vorgegebene Sollwert ein Referenzwert ist, der den ungestörten Betriebszustand des Bauteils/der Baugruppe (24 - 32) kennzeichnet.

4. Verfahren gemäß Anspruch 3, **dadurch gekennzeichnet, dass** der Referenzwert von den im Rahmen einer Referenzerfassung bzw. Referenzmessung ermittelten, von dem ungestörten Bauteil/der Baugruppe (24 - 32) ausgehenden und/oder von dem ungestörten Bauteit/der Baugruppe (24 - 32) beeinflussten elektromagnetischen Wellen abhängt.

5. Verfahren gemäß einem oder mehreren der vorhergehenden Ansprüche, **dadurch gekennzeichnet, dass** die elektromagnetischen Wellen kontinuierlich oder in gewissen Zeitabständen erfasst werden und dass die erfassten Werte - Messwerte - in einem insbesondere der Analyseeinrichtung zugeordneten Speicher zeitbezogen gespeichert werden.

6. Verfahren gemäß Anspruch 5, **dadurch gekennzeichnet, dass** die zeitbezogen abgespeicherten, erfassten Werte der elektromagnetischen Wellen derart analysiert werden, dass aus dem zeitlichen Verlauf der erfassten Werte Trends erkennbar sind, insbesondere eine zukünftige Betriebsstörung.

7. Verfahren gemäß einem oder mehren der vorhergehenden Ansprüche, **dadurch gekennzeichnet, dass** dem Bauteil/der Baugruppe (24 - 32) entstammende, das Bauteil/die Baugruppe (24 - 32) selbst und/oder Betriebszustände des Bauteils/der Baugruppe (24 - 32) kennzeichnende elektromagnetische Wellen erfasst werden, die sich von dem Bauteil/der Baugruppe (24 - 32) zu der Erfassungseinrichtung leitungsungebunden fortbewegen.

8. Verfahren gemäß einem oder mehren der vorhergehenden Ansprüche, **dadurch gekennzeichnet, dass** mittels eines geeigneten, bevorzugt von dem Bauteil beabstandeten Senders, geeignete elektromagnetische Wellen, die mit dem Bauteil/der Baugruppe (24 - 32) wechselwirken können, nämlich von dem Bauteil/der Baugruppe (24 - 32) beeinflusst werden können, insbesondere Funk- oder Mikrowellen, zu dem Bauteil/der Baugruppe (24 - 32) gesandt werden, und dass die von dem Bauteil/der Baugruppe (24 - 32) beeinflussten elektromagnetischen Wellen anschließend von der Erfassungseinrichtung erfasst werden.

9. Verfahren gemäß einem oder mehreren der vorhergehenden Ansprüche, **dadurch gekennzeichnet, dass** abhängig von der Analyse der erfassten elektromagnetischen Wellen, insbesondere abhängig von dem Ergebnis des Vergleichs des die Wellen charakterisierenden Ist-Werts mit dem Sollwert oder dem Grenzwert und/oder abhängig von erkannten Trends der erfassten Werte, einzelne Bauteile/Baugruppen (24 - 32) der Windenergieanlage (10) gesteuert oder geregelt, vorzugsweise ein- oder ausgeschaltet werden, oder dass ein oder mehrere elektromagnetische, akustische oder elektrische Signale, insbesondere Warnsignale, erzeugt werden.

10. Verfahren gemäß einem oder mehreren der vorhergehenden Ansprüche, **dadurch gekennzeichnet, dass** Betriebszustände der Windenergieanlage repräsentierende Daten, insbesondere die aktuelle Drehzahl des Rotors, die aktuelle Leistung der Windenergieanlage und dergleichen, erfasst und im Rahmen der Analyse der von dem Bauteil/der Baugruppe (24 - 32) ungesteuert ausgehende und/oder von diesem Bauteil/der Baugruppe (24- 32) ungesteuert beeinflusste, elektromagnetische Wellen berücksichtigt werden.

11. Verfahren gemäß Anspruch 9 oder 10, **dadurch gekennzeichnet, dass** die Windenergieanlage abhängig von der Analyse in einen anderen Betriebsmodus geschaltet wird, insbesondere abgeschaltet und/oder stromlos geschaltet wird.

12. Verfahren gemäß einem oder mehreren der vorhergehenden Ansprüche, **dadurch gekennzeichnet, dass** die Erfassungseinrichtung einen Empfänger elektromagnetischer Wellen aufweist, vorzugsweise einen Empfänger von Funkwellen.

13. System zur Überwachung der Betriebszustände von einem oder mehreren elektrischen/elektronischen Bauteilen oder Baugruppen einer Windenergieanlage, etwa einem Generator zur Umwandlung der mechanischen Energie des Rotors (18) der Windenergieanlage in elektrische Energie und/oder elektrischen Leitungen, und/oder elektrischen Anschlüssen, und/oder elektrischen Motoren oder dergleichen, **dadurch gekennzeichnet, dass** das System eine Erfassungseinrichtung aufweist zur Messung von von dem Bauteil/der Baugruppe (24 - 32) ungesteuert ausgehenden und/oder von diesem Bauteil/der Baugruppe (24 - 32) ungesteuert beeinflussten elektromagnetischen Wellen, sowie eine Analyseeinrichtung, mit der die erfassten Wellen anhand eines oder mehrerer vorgegebener Kriterien derart analysierbar sind, dass Änderungen der Betriebszustände des Bauteils/der Baugruppe (24 - 32) erkennbar sind.

14. Windenergieanlage zur Durchführung des Verfahrens gemäß einem oder mehreren der Ansprüche 1 - 12, mit zumindest einem Rotorblatt (22), sowie mit mindestens einem elektrischen/elektronischen Bauteil oder einer Baugruppe aus elektronischen/elektronischen Bauteilen, etwa einem Generator zur Umwandlung der mechanischen Energie des Rotors (18) in elektrische Energie, elektrischen Leitungen, elektrischen Anschlüssen, elektrischen Motoren oder dergleichen, **dadurch gekennzeichnet, dass** die Windenergieanlage ein System gemäß Anspruch 13 aufweist.

15. Windenergieanlage gemäß Anspruch 14, **dadurch gekennzeichnet, dass** das System mittels einer Datenverbindung mit der Steuerungs- und/oder Regelungseinrichtung der Windenergieanlage verbunden ist, mit der unterschiedliche Betriebsparameter der Windenergieanlage einstellbar sind, insbesondere der Windanstellwinkel des mindestens einen Rotorblatts, wobei über die Datenverbindung Daten von dem System zu der Steuerungs- und/oder Regelungseinrichtung übertragbar sind.

## Claims

1. Method for operation of a wind energy installation, having a rotor (18) which can be driven by the wind and has at least one rotor blade (22), and having at least one electrical/electronic component or an assembly composed of electrical/electronic components, for example a generator for converting the mechanical energy of the rotor (18) to electrical energy, electrical cables, electrical connections, electrical motors or the like, **characterized in that**, in order to monitor the operating states of the component/the assembly (24 - 32), electromagnetic waves emitted in an uncontrolled manner by the component/the assembly (24 - 32) or influenced in an uncontrolled manner by said component/assembly (24 - 32) is recorded by means of a recording device located at a distance from the component/the assembly (24 - 32) and are analysed by means of an analysis device on the basis of one or more predetermined criteria such that any change in the operating state of the component/the assembly (24 - 32) can be identified.

2. Method according to Claim 1, **characterized in that**, during the course of the analysis for the identification of disturbances in the operating state of the component/the assembly (24 - 32), in particular short-circuits or the like, at least one actual value, which characterizes the recorded electromagnetic waves is compared with a predetermined nominal value or a predetermined limit value.

3. Method according to Claim 1 or 2, **characterized in that** the predetermined nominal value is a reference value which characterizes the undisturbed operating state of the component/the assembly (24 - 32).

4. Method according to Claim 3, **characterized in that** the reference value is dependent on the electromagnetic waves which are determined during the course of a reference recording or reference measurement, and which are emitted from the undisturbed component/assembly (24 - 32) and/or are influenced by the undisturbed component/assembly (24 - 32).

5. Method according to one or more of the preceding claims, **characterized in that** the electromagnetic waves are recorded continuously or at specific time intervals, and **in that** the recorded values - measured values - are stored, related to time, in a memory which in particular is associated with the analysis device.

6. Method according to Claim 5, **characterized in that** the recorded values of the electromagnetic waves that are stored on a time-related basis are analysed such that trends can be identified from the time profile of the recorded values, in particular a future malfunction.

7. Method according to one or more of the preceding claims, **characterized in that** electromagnetic waves, which originate from the component/ the assembly (24 - 32) and which characterize the component/the assembly (24 - 32) itself and/or operating states of the component/the assembly (24 - 32), are recorded which travel wirelessly from the component/the assembly (24 - 32) to the recording device.

8. Method according to one or more of the preceding claims, **characterized in that** suitable electromagnetic waves which can interact with the component/the assembly (24 - 32), namely which can be influenced by the component/the assembly (24 - 32), in particular radio waves or microwaves, are transmitted to the component/the assembly (24 - 32) by means of a suitable transmitter which is preferably at a distance from the component, and **in that** the electromagnetic waves which are influenced by the component/the assembly (24 - 32) are then recorded by the recording device.

9. Method according to one or more of the preceding claims, **characterized in that** individual components/assemblies (24 - 32) of the wind energy installation (10) are subjected to open-loop or closed-loop control as a function of the analysis of the recorded electromagnetic waves, in particular as a function of the result of the comparison of the actual value, which characterizes the waves, with the nominal value or the limit value, and/or as a function of identified trends in the recorded values, preferably by being switched on or off, or **in that** one or more electromagnetic, acoustic or electrical signals, in particular warning signals, are produced.

10. Method according to one or more of the preceding claims, **characterized in that** data which represents operating states of the wind energy installation, in particular the instantaneous rotation of the speed of the rotor, the instantaneous power of the wind energy installation and the like, are recorded and taken into account in the course of the analysis of the electromagnetic waves which are emitted in an uncontrolled manner by the component/the assembly (24 - 32) and/or which are influenced in an uncontrolled manner by said component/assembly (24 - 32).

11. Method according to Claim 9 or 10, **characterized in that** the wind energy installation is switched to a different operating mode, and in particular is switched off and/or is switched such that no current flows, as a function of the analysis.

12. Method according to one or more of the preceding claims, **characterized in that** the recording device has a receiver for electromagnetic waves, preferably a receiver for radio waves.

13. System for monitoring the operating states of one or more electrical/electronic components or assemblies of a wind energy installation, for example a generator for conversion of the mechanical energy of the rotor (18) of the wind energy installation to electrical energy, and/or electrical cables and/or electrical connections, and/or electric motors or the like, **characterized in that** the system has a recording device for the measuring of electromagnetic waves which are emitted in an uncontrolled manner by the component/the assembly (24 - 32) and/or which are influenced in an uncontrolled manner by this component/this assembly (24 - 32), as well as an analysis device, by means of which the recorded waves can be analysed on the basis of one or more predetermined criteria such that changes in the operating states of the component/the assembly (24 - 32) can be identified.

14. Wind energy installation for carrying out the method according to one or more of Claims 1 to 12, having at least one rotor blade (22) and having at least one electrical/electronic component or an assembly composed of electronic/electronic components, for example a generator for conversion of the mechanical energy of the rotor (18) to electrical energy, electrical cables, electrical connections, electric motors or the like, **characterized in that** the wind energy installation has a system according to Claim 13.

15. Wind energy installation according to Claim 14, **characterized in that** the system is connected by means of a data link to the open-loop and/or closed-loop control device for the wind energy installation, by means of which different operating parameters of the wind energy installation can be set, in particular the wind incidence angle of the at least one rotor blade, wherein data can be transmitted via the data link from the system to the open-loop or closed-loop control device.

## Revendications

1. Procédé de fonctionnement d'une éolienne, avec un rotor (18) pouvant être entraîné par le vent et doté d'au moins une pale de rotor (22) ainsi que d'au moins un composant électrique/électronique ou d'un module composé de composants électriques/électroniques, notamment d'un générateur de conversion de l'énergie mécanique du rotor (18) en énergie électrique, de câbles électriques, de raccords électriques, de moteurs électriques ou de leur équivalent, **caractérisé en ce que** pour surveiller les états de fonctionnement du composant/module (24 - 32), des ondes électromagnétiques partant de façon non commandée du composant/module (24 - 32) et/ou influencées de façon non commandée par ce composant/module (24 - 32) sont mesurées au moyen d'un dispositif de détection placé à une certaine distance du composant/module (24 - 32) et sont analysées au moyen d'un dispositif d'analyse à l'aide d'un ou de plusieurs critères prédéfinis de telle sorte qu'un changement d'état de fonctionnement du composant/module (24 - 32) peut être identifié.

2. Procédé selon la revendication 1, **caractérisé en ce qu'**au cours de l'analyse de détection des dysfonctionnements de l'état de fonctionnement du composant/module (24 - 32), notamment des courts-circuits ou de leur équivalent, au moins une valeur réelle caractérisant les ondes électromagnétiques détectées est comparée à une valeur théorique prédéfinie ou à une valeur limite prédéfinie.

3. Procédé selon la revendication 1 ou 2, **caractérisé en ce que** la valeur théorique prédéfinie est une valeur de référence caractérisant l'état de fonctionnement sans dysfonctionnement du composant/module (24 - 32).

4. Procédé selon la revendication 3, **caractérisé en ce que** la valeur de référence dépend des ondes électromagnétiques détectées dans le cadre d'une détection de référence et/ou d'une mesure de référence, partant du composant/module (24-32) sans dysfonctionnement et/ou influencé par le composant/module (24 - 32) sans dysfonctionnement.

5. Procédé selon l'une quelconque des revendications précédentes ou plusieurs d'entre elles, **caractérisé en ce que** les ondes électromagnétiques sont détectées en continu ou à intervalles donnés et que les valeurs détectées - les valeurs de mesure - sont mémorisées avec un référentiel temporel dans une mémoire notamment associée au dispositif d'analyse.

6. Procédé selon la revendication 5, **caractérisé en ce que** les valeurs à référentiel temporel détectées et mémorisées des ondes électromagnétiques sont analysées de telle sorte que des tendances, notamment un futur dysfonctionnement, sont identifiables à partir de la courbe dans le temps des valeurs détectées.

7. Procédé selon l'une quelconque des revendications précédentes ou plusieurs d'entre elles, **caractérisé en ce que** les ondes électromagnétiques provenant du composant/module (24 - 32), caractérisant le composant/module (24 - 32) lui-même et/ou les états de fonctionnement du composant/module (24 - 32) sont détectées, lesdites ondes se déplaçant du composant/module (24 - 32) vers le dispositif de détection en suivant le câble.

8. Procédé selon l'une quelconque des revendications précédentes ou plusieurs d'entre elles, **caractérisé en ce que** les ondes électromagnétiques adaptées à l'aide d'un émetteur adapté placé de façon préférée à une certaine distance du composant et pouvant interagir avec le composant/module (24 - 32), pouvant notamment être influencées par le composant/module (24 - 32), notamment être envoyées par ondes radio ou micro-ondes au composant/module (24 - 32) et que les ondes électromagnétiques influencées par le composant/module (24 - 32) sont ensuite détectées par le dispositif de détection.

9. Procédé selon l'une quelconque des revendications précédentes ou plusieurs d'entre elles, **caractérisé en ce qu'**en fonction de l'analyse des ondes électromagnétiques détectées, notamment en fonction du résultat de la comparaison de la valeur réelle caractérisant les ondes avec la valeur théorique ou la valeur limite et/ou en fonction des tendances identifiées des valeurs détectées, des composants/modules (24 - 32) individuels de l'éolienne (10) sont commandés ou réglés, de préférence connectés ou déconnectés, ou qu'un ou plusieurs signaux électromagnétiques, acoustiques ou électriques, notamment des signaux d'avertissement, sont produits.

10. Procédé selon l'une quelconque des revendications précédentes ou plusieurs d'entre elles, **caractérisé en ce que** les données représentant les états de fonctionnement de l'éolienne, notamment la vitesse de rotation actuelle du rotor, la puissance actuelle de l'éolienne ou leur équivalent, sont détectées et prises en compte dans le cadre de l'analyse des ondes électromagnétiques partant de façon non commandée du composant/module (24 - 32) et/ou influencées de façon non commandée par ce composant/module (24 - 32).

11. Procédé selon la revendication 9 ou 10, **caractérisé en ce qu'**en fonction de l'analyse, l'éolienne est commutée dans un autre mode de fonctionnement, notamment déconnectée et/ou connectée sans alimentation en courant.

12. Procédé selon l'une quelconque des revendications précédentes ou plusieurs d'entre elles, **caractérisé en ce que** le dispositif de détection comporte un récepteur d'ondes électromagnétiques, de préférence un récepteur d'ondes radio.

13. Système pour surveiller les états de fonctionnement d'un ou de plusieurs composants électriques/électroniques ou modules d'une éolienne, notamment d'un générateur de conversion de l'énergie mécanique du rotor (18) de l'éolienne en énergie électrique et/ou de câbles électriques et/ou de raccords électriques et/ou de moteurs électriques ou de leur équivalent, **caractérisé en ce que** le système comporte un dispositif de détection servant à mesurer les ondes électromagnétiques partant de façon non commandée du composant/module (24 - 32) et/ou influencées de façon non commandée par ce composant/module (24 - 32) ainsi qu'un dispositif d'analyse à l'aide duquel les ondes détectées peuvent être analysées à l'aide d'un ou de plusieurs critères prédéfinis de façon à permettre d'identifier des changements d'états de fonctionnement du composant/module (24 - 32).

14. Éolienne permettant la mise en oeuvre du procédé selon l'une quelconque des revendications 1 à 12 ou plusieurs d'entre elles, avec au moins une pale de rotor (22) ainsi qu'avec au moins un composant électrique/électronique ou un module composé de composants électroniques/électroniques, notamment un générateur de conversion de l'énergie mécanique du rotor (18) en énergie électrique, des câbles électriques, des raccords électriques, des moteurs électriques ou de leur équivalent, **caractérisée en ce que** l'éolienne comporte un système selon la revendication 13.

15. Éolienne selon la revendication 14, **caractérisée en ce que** le système est relié au dispositif de commande et de réglage de l'éolienne au moyen d'une liaison de données, ledit dispositif permettant de régler différents paramètres de fonctionnement de l'éolienne, notamment l'angle d'attaque du vent de l'au moins une pale de rotor, des données pouvant être transmises du système au dispositif de commande et de réglage via la liaison de données.
